# EUROPÄISCHE PATENTSCHRIFT

(11) **EP 3 491 331 B1**
(45) Veröffentlichungstag und Bekanntmachung des Hinweises auf die Patenterteilung: **17.06.2020**
(21) Anmeldenummer: 17746086.2
(22) Anmeldetag: 31.07.2017
(51) Int. Cl.: G01B 11/24, G01N 21/90

(54) **VERFAHREN UND VORRICHTUNG ZUR OPTISCHEN UNTERSUCHUNG TRANSPARENTER KÖRPER**
METHOD AND DEVICE FOR THE OPTICAL EXAMINATION OF TRANSPARENT BODIES
PROCÉDÉ ET DISPOSITIF POUR L'EXAMEN OPTIQUE DE CORPS TRANSPARENTS

(30) Priorität: 01.08.2016 DE 102016114190
(43) Veröffentlichungstag der Anmeldung: 05.06.2019
(73) Patentinhaber: SCHOTT Schweiz AG, 9001 St. Gallen (CH)
(72) Erfinder: KLÄGER, Christian, 9030 Abtwil (CH); WIRTH, Andreas, 99438 Buchfahrt (DE); THÜRK, Jürgen, 79379 Müllheim (DE)
(74) Vertreter: Blumbach · Zinngrebe Patentanwälte PartG mbB
(86) Internationale Anmeldenummer: PCT/EP2017/069259
(87) Internationale Veröffentlichungsnummer: WO 2018/024648

(56) Entgegenhaltungen:
- DE-A1-102011 100 146
- DE-A1-102012 016 342
- US-A- 5 987 159
- US-A1- 2006 098 191

## Beschreibung

Die vorliegende Erfindung betrifft ein Verfahren und eine Vorrichtung zur optischen Untersuchung von Körpern, vorzugsweise von transparenten Körpern aus Kunststoff, Glas oder Glaskeramik. Die Untersuchung erfolgt dabei mittels einer berührungslosen Erfassung und Messung des Körpers, wobei optische Bildaufnehmer eingesetzt werden.

Das berührungslose Erfassen von Informationen über unterschiedlichste Arten von Körpern ist in vielen Bereichen von Wissenschaft und Technik von großem Interesse. Die entsprechenden Anwendungen sind sehr vielfältig und reichen von der geometrischen Erfassung bis zur Prüfung von Oberflächen bei technischen Produkten. Eine wichtige Rolle spielt dabei die berührungslose optische Untersuchung technischer Produkte in der Fertigung, insbesondere zur Qualitätssicherung.

Dabei sollen sowohl beispielsweise geometrische Abweichungen von einer idealen Sollform, etwa Aufwölbungen oder Vertiefungen, aber auch lokale Defekte auf der Oberfläche oder in dem Materialvolumen wie beispielsweise Poren, Kratzer, Riefen, Absplitterungen, Grate etc. erfasst werden. Weiterhin sollen auch aufliegende oder anhaftende Fremdkörper oder Fremdmaterialien wie Staub, Fussel, Tropfen, Späne, Splitter oder sonstige Verschmutzungen identifiziert werden können.

Bei Körpern, welche die verwendete Strahlung oder Wellenform größtenteils reflektieren, absorbieren oder streuen, können auf diese Weise Informationen über ihre Oberflächenform gewonnen werden. Sofern die Strahlung in das Objekt eindringt und an Strukturen im Inneren reflektiert, absorbieren oder gestreut wird, können zusätzlich Information über den vollen dreidimensionalen inneren Aufbau und dazu über die Oberflächenform gewonnen werden. Somit können dreidimensionale Informationen über das Objekt generiert werden. Auf diese Weise können auch unerwünschte Defekte im Volumen wie beispielsweise Lunker, Blasen, Risse oder eingeschlossene Fremdmaterialien erkannt werden.

Formtreue und Defektfreiheit spielen eine große Rolle für die Beherrschung von Fertigungsprozessen und die Qualitätssicherung. Insbesondere zerstörungsfreie, berührungslose dreidimensionale Untersuchungsverfahren können hier einen hohen Nutzwert entfalten. Auf Basis vorliegender dreidimensionaler Messdaten können weiterführende Qualitätsentscheidungen abgeleitet werden.

Besonderen Nutzen haben solche Verfahren bei der Prüfung von Körpern aus Kunststoff oder Glas. Mittels entsprechender dreidimensionaler Untersuchungsverfahren können beispielsweise die Außenkonturen eines Glaskörpers erfasst und mit einer idealen Sollform verglichen werden. Auf diese Weise sind auch Oberflächendefekte wie Kratzer, lokale Formabweichung oder Anhaftungen wie Partikel oder Glaskrösel erkennbar. Mittels dreidimensionaler Messung können zudem auch Objekte im Inneren von Glaskörpern erfasst werden. Von besonderem Interesse ist dieses für die Erkennung von Glasdefekten wie beispielsweise Fremdmaterialien, Einschlüssen und Blasen. Dabei ist es auch interessant, ob sich das Objekt über oder unter der Oberfläche befindet, also beispielsweise nur aufliegt oder sich im Glas selbst befindet.

So beschreibt die DE 10 2004 047 928 B4 ein Verfahren zum dreidimensionalen Vermessen von Objektoberflächen, wobei ein optischer Bildsensor einen mehrere Bilder umfassenden Bildstapel aufnimmt. Die Einzelbilder des Bildstapels sind in ihrer Z-Richtung voneinander beabstandet. Um eine große Z-Auflösung zu erhalten, wird mit einer sehr geringen Tiefenschärfe gearbeitet. Aus den Einzelbildern eines Bildstapels werden sodann diejenigen Pixel herausgesucht, die scharf abgebildet sind. Aufgrund der geringen Tiefenschärfe eines einzelnen Bildes kann durch die Auswertung der Schärfeninformation in einem Messdurchlauf eine Objektoberfläche vermessen werden.

Aus dem Dokument DE 10 2012 016 342 A1 ist beispielsweise ein Inspektionsverfahren für Glasbehälter bekannt, welches eine im Inneren des Glasbehälters angeordnete Beleuchtungseinrichtung umfasst.

Die US 5 987 159 A beschreibt ein Verfahren zur Detektion von Defekten an semiopaken Behältern wie beispielsweise einer etikettierten Flasche. Die Defekte können dabei an der Innenseite der Seitenwand des Behälters vorhanden sein und damit für das menschliche Auge von außen nicht sichtbar. Hierzu werden wechselseitig zwei Bilder erzeugt und miteinander verglichen, wobei das erste Bild bei Auflicht und das zweite Bild bei Durchlicht aufgenommen wird. Bei Durchlicht kann ein Defekt bzw. ein Objekt an der Innenseite der Seitenwand in seiner Silhouette abgebildet werden.

Die US 2006/098191 A1 beschreibt ebenfalls eine optische Inspektionsvorrichtung für Behälter. Der Behälter rotiert für die Untersuchung, wobei er mit einer diffusen Lichtquelle beaufschlagt wird. Ein optischer Sensor kann reflektierte Lichtstrahlen empfangen, um Blasen ("blister") in der Seitenwand zu detektieren.

Aus dem Dokument DE 10 2011 100 146 A1 ist ein weiteres Verfahren bekannt, welches eine dreidimensionale Messung von Objekte aus Glas offenbart.

Den bekannten Vorrichtungen und Verfahren haftet der Nachteil an, Störungen im optischen System, also etwa im Bereich des Bildaufnehmers, als Fehler im Glasobjekt zu interpretieren. Die Verfahren sind nicht dazu ausgebildet, zu unterscheiden, ob die Fehlerursache nun im Bereich des optischen Systems oder in bzw. an dem untersuchten Körper liegt. Konkret bedeutet dies, dass beispielsweise nicht unterschieden werden kann, ob ein aufliegender Fussel nun auf dem Körper oder auf der Linse des Bildaufnehmers liegt.

Demzufolge können Störungen oder Funktionsbeeinträchtigungen der zugehörigen Vorrichtung zur optischen Untersuchung nicht von Fehlern in Zusammenhang mit dem zu untersuchenden Körper unterschieden werden.
Schatten im Glas können etwa eine Verunreinigung des Glases darstellen und sind in diesem Sinne Fehler, die ursächlich mit dem zu untersuchenden Körper zusammenhängen.

Diese unzureichende Unterscheidung führt dazu, dass die analysierten Fehler auf dem Glasobjekt deutlich grösser sein müssen als die Störungen im System. Soll die Genauigkeit des bildgebenden Systems aber erhöht werden, so ist dieses nur möglich, indem die Störungen im Gesamtsystem reduziert werden.

Eine Erhöhung der Genauigkeit des Verfahrens in die Größenordnungen der Schwankungen in der Glasoberfläche sind nicht möglich, da selbst mit einem perfekten Inspektionssystem derartige Störungen weiterhin als Fehler interpretiert werden. Von daher ist eine Verbesserung der Genauigkeit der Untersuchung kaum möglich, ohne zeitgleich einen höheren Fehlausschuss infolge von Störungen durch die Vorrichtung selbst hervorzurufen.

Weitere Nachteile ergeben sich daraus, dass weitergehende Analysen von Defekten nur schwer möglich sind, z.B. die Anzahl der Defekte, oder auch, dass die Analyse von bestimmten Fehlern nur mit reduzierter Wahrscheinlichkeit möglich ist, z.B. von Rissen, die nur unter ganz bestimmten Winkeln überhaupt sichtbar sind.

Der Erfindung liegt daher die Aufgabe zugrunde, ein Verfahren und eine Vorrichtung zur optischen Untersuchung vorzugsweise transparenter Körper zur Verfügung zu stellen, unter Vermeidung der vorstehend genannten Nachteile.

Dabei soll insbesondere eine Erhöhung der Genauigkeit der Messung und damit der Untersuchung erreicht werden. Ferner soll es möglich sein, mit dem Verfahren zwischen Fehlern im Zusammenhang mit dem zu untersuchenden Körper sowie Störungen, welche systembedingt sind, zu unterscheiden.

Uberraschend einfach wird diese Aufgabe durch ein Verfahren und eine Inspektionsvorrichtung zur optischen Untersuchung vorzugsweise transparenter Körper nach einem der unabhängigen Ansprüche 1 bzw. 16 gelöst.

Bevorzugte Ausführungsformen und Weiterbildungen der Erfindung sind den jeweiligen abhängigen Ansprüchen zu entnehmen.

Die Erfindung betrifft demnach ein Verfahren zur optischen Untersuchung von Körpern, vorzugsweise von transparenten Körpern, umfassend unter Anderem die Verwendung eines optischen Bildaufnehmers sowie einer Recheneinheit. Zusätzlich kann noch eine Beleuchtungseinrichtung vorgesehen sein und bei dem Verfahren verwendet werden, um den zu untersuchenden Körper zu beleuchten.

Für die Untersuchung wird der Körper während der Untersuchung mit dem zu untersuchenden Bereich in dem Erfassungsbereich des Bildaufnehmers positioniert. Der zu untersuchende Bereich kann dabei den gesamten Körper, aber auch Bestandteile wie zum Beispiel den Boden oder Seitenflächen umfassen.

Der Körper wird während der Untersuchung um eine Rotationsachse gedreht, wobei während der Drehung eine Vielzahl von sich zumindest teilweise überlappenden Einzelaufnahmen von dem Körper mit dem Bildaufnehmer aufgenommen werden. Die Drehung erfolgt dabei vorzugsweise kontinuierlich, wobei aber auch eine diskontinuierliche Drehung möglich ist.

Die Aufnahme einer Einzelaufnahme von dem Körper erfolgt jeweils bei einer bestimmten Drehposition des Körpers in Bezug auf den optischen Bildaufnehmer. Somit ist der Moment der Aufnahme einer Einzelaufnahme durch eine vorbestimmte Drehposition gekennzeichnet, die die Orientierung des Körpers in Bezug auf den Bildaufnehmer bestimmt. Die Einzelaufnahme wird als digitales Bild an die Rechnereinheit zum Auswerten übertragen. Hierzu ist die Rechnereinheit von Vorteil mit einer Bildanalysefunktion ausgestattet, welche es erlaubt, anhand von hinterlegten Fehlerinformationen, etwa in einer Fehlermerkmalsdatenbank, eine Analyse von digitalen Bildern vorzunehmen. Zusätzlich können auch der Moment der Aufnahme eines Bildes und/oder die Drehposition an die Rechnereinheit übertragen werden, um zusätzliche Informationen für die Bildanalyse zu erhalten.

Im Einzelnen umfasst das Verfahren dabei weiterhin folgenden Schritte:
a) Erstellen einer ersten Einzelaufnahme von dem Körper und Übertragen als digitales Bild an die Rechnereinheit, wobei das Bild als Referenzbild dient,
b) Rotieren des Körpers um einen vorbestimmten Drehwinkel bis zum Erreichen einer vorbestimmten nachfolgenden Drehposition,
c) Erstellen einer darauffolgenden, weiteren Einzelaufnahme von dem Körper bei dieser Drehposition, und Übertragen der zweiten Einzelaufnahme als digitales weiteres Bild an die Rechnereinheit,
d) Rechnerisches Vergleichen des Referenzbildes mit dem weiteren Bild durch Subtrahieren der Bilder zur Erzeugung eines Differenzbildes,
e) Rechnerisches Abwickeln des Differenzbildes durch Auffalten, vorzugsweise zylindrisches Auffalten,
f) Analysieren des aufgefalteten Differenzbildes durch die Rechnereinheit, wobei zur Analyse des Differenzbildes der laterale Versatz eines Objekts bei aufeinanderfolgenden Bildern in Relation zur Rotationsgeschwindigkeit des Körpers ausgewertet wird,
g) Wiederholen der vorstehenden Schritte b) bis f), wobei jeweils das weitere Bild als Referenzbild genommen wird, bis zumindest einer vollständigen Rotation des Körpers.

Im Sinne der Erfindung wird also nach einem vorbestimmten Drehwinkel und bei Erreichen der vorbestimmten Drehposition eine weitere Einzelaufnahme gemacht und mit der vorherigen Aufnahme als Referenzbild verglichen. Die zweite Einzelaufnahme wird also bei einem erneuten Durchlaufen jeweils als neues Referenzbild verwendet.

Das Verfahren beruht demnach darauf, dass jeweils zwei bei aufeinanderfolgenden Drehpositionen aufgenommene Einzelaufnahmen bzw. die zugehörigen digitalen Bilder des Körpers miteinander verglichen werden. Idealerweise wird dabei das Verfahren solange durchgeführt, bis der Körper zumindest eine vollständige Umdrehung in Bezug auf die Position des Bildaufnehmers vollzogen hat und sich somit der gesamte zu untersuchende Bereich des Körpers zumindest einmal im Aufnahmebereich des Bildaufnehmers zur Aufnahme befunden hat. Die Summe der Drehwinkel ergibt demnach wenigstens 360°, so dass der Körper umlaufend aus unterschiedlichen Blickpositionen aufgenommen wird.

Das Erstellen der Aufnahmen erfolgt vorzugsweise bereits digital, um die nachfolgende Auswertung zu vereinfachen. Andernfalls kann eine Digitalisierung der Aufnahme vor der Übertragung an die Rechnereinheit erfolgen.

In der Rechnereinheit kann ein Speichern der Aufnahmen erfolgen. Aus Gründen einer höheren Bearbeitungsgeschwindigkeit kann dies besonders günstig direkt im RAM erfolgen. Selbstverständlich ist auch ein Ablegen auf anderen Speichermedien möglich.

In einer nicht beanspruchten Variante ist es auch möglich, den Körper ortsfest zu halten und den Bildaufnehmer um den Körper rotieren zu lassen. Hierfür können auch mehrere Bildaufnehmer vorgesehen sein, welche in unterschiedlichen Positionen relativ zu dem Körper angeordnet sind.

Die Beleuchtungseinrichtung kann dabei beispielsweise umlaufend angeordnet sein oder ebenfalls mit rotiert werden. Im Allgemeinen ist eine derartige Anordnung aber komplexer, weshalb der vorstehend genannten Ausführungsform mit rotierendem Körper und fest angeordnetem Bildaufnehmer und/oder Beleuchtungseinrichtung der Vorzug gegeben wird.

Der Vergleich eines ersten und eines folgenden, zweiten Bildes von dem Körper bei zwei aufeinanderfolgenden, unterschiedlichen Drehpositionen kann dabei besonders günstig durch ein rechnerisches Subtrahieren dieser beiden erzeugten Bilder erfolgen. Hierunter wird verstanden, dass nur diejenigen Informationen aus den beiden Bildern für eine weitere Auswertung erhalten bleiben, welche nicht identisch sind. Das bei der Subtraktion erhaltene Bild wird in diesem Zusammenhang auch als Differenzbild bezeichnet.

Ein derart erzeugtes Differenzbild kann mittels bekannter Verfahren aufgefaltet werden. Das Auffalten orientiert sich dabei an der Objektgeometrie. Im Fall von zumindest abschnittsweise rotationssymmetrischen Körpern können die Bilder zylindrisch aufgefaltet werden. Vorzugsweise wird das Bild also zylindrisch aufgefaltet. Das aufgefaltete Bild oder Differenzbild kann mittels der Bildanalysefunktion auf Defekte hin analysiert werden.

Mit dem Verfahren können unterschiedliche Defekte erkannt und identifiziert werden. Hierbei ist es auch möglich, bei der Untersuchung zu unterscheiden, ob die Fehlerursache im Bereich des optischen Systems oder in der Umgebung, oder aber in bzw. an dem untersuchten Körper liegt. Damit lässt sich beispielsweise unterscheiden, ob ein Partikel, etwa ein Staubkorn oder ein Fussel, auf dem Körper oder auf einem Bauteil des optischen Systems, etwa der Linse, liegt, oder aber sich im Moment der Aufnahme in dem Luftraum zwischen dem Körper und dem Bildaufnehmer befunden hat. Bei Fehlern, die ihre Ursache in dem untersuchten Körper haben, kann unterschieden werden, ob der Fehler auf der dem Bildaufnehmer zu- oder abgewandten Oberfläche, oder aber in dem Volumen des Körpers, liegt.

Mit dem erfindungsgemäßen Verfahren wird also beispielsweise ein Partikel im Bereich des optischen Systems wie ein auf der Linse aufliegendes Staubkorn, bei aufeinanderfolgenden, sich zumindest teilweise überlappenden Einzelaufnahmen von dem Körper stets an der gleichen Position des Bildes vorhanden sein. Durch die rechnerische Elimination gleicher Bildbestandteile bei zwei aufeinanderfolgenden Bildern wird im Differenzbild dieser Partikel dann nicht mehr angezeigt. Demnach ist das Differenzbild ein um diesen Systemfehler bereinigtes Bild, das nun mit gängigen rechnerunterstützten Verfahren analysiert werden kann.

Bei bevorzugten Ausführungsformen können somit zur Analyse des Differenzbildes Objekte auch aus dem Differenzbild eliminiert werden, welche bei aufeinanderfolgenden Bildern an gleicher Position vorhanden sind.

Hierdurch kann die Genauigkeit der Untersuchung gesteigert werden, da die Störungen im Gesamtsystem reduziert oder sogar vollständig eliminiert werden können. Auf diese Weise gelingt es, systembedingten Fehlausschuss bei der Untersuchung zu minimieren und die Effizienz des optischen Untersuchungsverfahrens deutlich zu verbessern.

Mit dem erfindungsgemäßen Verfahren können auch Fehler, die mit herkömmlichen Untersuchungsverfahren nicht oder nur mit erhöhter Unsicherheit identifiziert werden können, beispielsweise Risse, die nur aus ganz bestimmten Winkeln beobachtbar sind, sicher erkannt werden. Insbesondere können systembedingte Fehler von denjenigen unterschieden werden, die im Bereich des Körpers liegen.

Zur Auswertung wird vorteilhafterweise die Rotationsgeschwindigkeit des Körpers relativ zum Bildaufnehmer herangezogen. Aus der Rotationsgeschwindigkeit des Körpers und seiner geometrischen Abmessung lassen sich Informationen über den exakten Ort des Fehlers im Bereich des Körpers ermitteln.

So kann beispielsweise ein Fehler auf der äußeren Mantelfläche des Körpers bei zwei aufeinanderfolgenden Aufnahmen auf den erzeugten Bildern einen lateralen Versatz aufweisen, d.h. er wird bei den Bildern nicht an der gleichen Position angezeigt. Aus dem lateralen Versatz und der Zeitspanne zwischen den beiden Aufnahmen lässt sich die Geschwindigkeit des Fehlers infolge der Rotation des Körpers rechnerisch ermitteln, welche näherungsweise der Bahngeschwindigkeit des Fehlers an der entsprechenden Position des Körpers entspricht. Hieraus lässt sich der Abstand zu der Symmetrieachse des Körpers ermitteln und damit die Bahnkurve der Fehlerposition. Anhand der Bahnkurve der Fehlerposition oder dem radialen Abstand zur Symmetrieachse des Körpers lässt sich in Verbindung mit hinterlegten geometrischen Daten zu dem Körper dann ermitteln, ob die Fehlerposition beispielsweise auf der äußeren Mantelfläche, in dem Volumen oder auf der innenliegenden Oberfläche des Körpers zu lokalisieren ist.

Von Vorteil weisen aufeinanderfolgend aufgenommene Einzelaufnahmen des Körpers daher einen Überlapp auf. Um die vorstehend genannten Fehler möglichst gut zu erkennen, kann ein großer Überlapp günstig sein, so dass der laterale Versatz des Fehlers in aufeinanderfolgenden Bildern eher klein ist.

Hierdurch kann auch die Dimension eines Fehlers besser erkannt werden, da beispielsweise die Länge eines Fehlers dann aus seinem lateralen Versatz bei aufeinanderfolgenden Differenzbildern herausgerechnet werden kann.

In einer bevorzugten Ausführungsform ist der Körper dabei,
zumindest abschnittsweise, rotationssymmetrisch ausgebildet. Die Rotation des Körpers kann dann um seine Symmetrieachse erfolgen, so dass die Entfernung zur Beleuchtungseinrichtung und/oder zum Bildaufnehmer während der Rotation identisch gehalten werden kann. Bei rotationssymmetrischen Körpern oder zumindest abschnittsweise rotationssymmetrischen Körpern liegt die Rotationssachse günstig auf der Symmetrieachse, fluchtet also mit dieser.

Auf diese Weise lassen sich die Aufnahme der Bilder und die Bildauswertung vereinfachen, da sehr einfach auch die Rotationsgeschwindigkeit der Körperoberfläche ermittelt und in die Auswertung mit einbezogen werden kann. Die Bewegungsgeschwindigkeit des Fehlers kann dann anhand des lateralen Versatzes in Relation zur Rotationsgeschwindigkeit des Körpers ausgewertet werden.

Der Körper kann aus einem transparenten Material, umfassend Kunststoff, Glas, insbesondere Borosilikatglas oder Glaskeramik, gefertigt sein. Das Verfahren kann auch bei nicht transparenten Materialien angewandt werden, wobei es dann auch vorteilhaft in Reflexion betrieben werden kann.

Geeignete Körper können sowohl Vollmaterial betreffen, etwa Stäbe oder Stababschnitte, aber auch hohlkörperförmig ausgebildet sein, etwa Rohre oder Rohrabschnitte. Besonders geeignet ist das Verfahren für die Untersuchung von Packmitteln, Containern oder Behältern, an welche sehr hohe Anforderungen in Bezug auf Verunreinigungen gestellt werden, wobei gleichzeitig aber auch das Material des Packmittels selbst von hoher Qualität sein soll.

Dies trifft beispielsweise zu für pharmazeutische Verpackungen, beispielsweise Spritzen, Karpulen, Fläschchen oder Ampullen, aber auch für Behältnisse für beispielsweise Parfümerieerzeugnisse. Pharmazeutische Packmittel aus Glas, insbesondere aus Borosilikatglas, lassen sich mit dem erfindungsgemäßen Verfahren sehr gut untersuchen. Ebenso können aber auch andere Körper, etwa Behälter, Rohre oder Stäbe aus Kunststoff oder Glaskeramik, mit dem Verfahren untersucht werden.

Körper, die einen Hohlraum umfassen, sind bei der Untersuchung vorzugsweise leer, um keine zusätzlichen möglichen Fehlerquellen in die Untersuchung mit einzubeziehen und damit die Untersuchung zu erschweren. Dies könnten beispielsweise Luftblasen darstellen, welche in der in das Volumen eingebrachten Substanz vorhanden sind.

Der optische Bildaufnehmer ist als abbildende Optik ausgebildet. Der Bildaufnehmer ist dazu eingerichtet, ein zweidimensionales Abbild einer Fläche im Objektraum aufzunehmen. Die Abbildung funktioniert ähnlich einer optischen Abbildung mittels Linsen, wobei das zugrundeliegende Prinzip auch auf andere Wellenlängenbereiche des elektromagnetischen Spektrums oder auf andere Wellenformen, beispielsweise akustische Wellen, übertragen werden kann.

Insofern können als transparente Körper im Sinne der Erfindung auch Körper gelten, welche in Bezug auf die Wellenlänge des Bildaufnehmers transparent sind bzw. eine hohe Transparenz aufweisen.

Der Bildaufnehmer umfasst typischerweise einen Bildsensor und ein abbildendes Element. Der Bildsensor kann die Fläche im Objektraum zweidimensional erfassen und die einfallende Strahlung in elektrische Signale umwandeln. Die scharf abgebildete Fläche wird auch als Fokalebene bezeichnet.

Meist ist das digitale Abbild in einzelne Bildelemente (Pixel) unterteilt. In bestimmten Ausführungsformen, wenn etwa auf Informationen über die Ortsabhängigkeit in einer Koordinate verzichtet werden kann, kann der Bildsensor eindimensional als Zeilenkamera ausgebildet sein. Vorliegend sind zweidimensional arbeitende Bildsensoren hilfreich.

Bildsensoren können zum Beispiel Matrixkameras auf Basis von CCD- oder CMOS-Chiptechnologie umfassen. Über vorgeschaltete Wandler (bspw. Szintillatorplatten, fluoreszierende Schichten, Upconversion-Materialien, ...) lassen sich damit auch Wellenlängenbereiche oder andere Strahlungen detektieren, für welche die eingesetzten Chips selbst nicht empfindlich sind. Des Weiteren können die Bildsensoren auch IR-Kameras, Bolometer, InGaAs-Kameras oder HgCdTe-Kameras umfassen.

Die Abbildung wird mit einem Element vorgenommen, das im Folgenden als Objektiv bezeichnet wird. Im Falle elektromagnetischer Strahlung im Wellenlängenbereich der ultravioletten bis infraroten Strahlung besteht ein Objektiv typischerweise aus einer Linse oder einer Kombination von Linsen. Die gleiche Abbildungs-Funktion kann aber durch andere Komponenten, beispielsweise durch Zonenplatten oder Fresnellinsen, erreicht werden. In Sonderfällen ist es auch möglich, zweidimensionale Bilder mit einer Scannertechnik zu erzeugen.

Zur Auswertung werden die Bilddaten an eine elektronische Rechnereinheit übertragen, in der eine Speicherung der von dem Bildaufnehmer übertragenen Informationen erfolgen kann. Die Bildinformation kann auch zusätzlich eine ortsabhängige Tiefeninformation umfassen, welche sich anhand des Abstands zwischen Körper und Bildaufnehmer sowie dem Schärfegrad ermitteln lässt.

Eine Digitalisierung der vom Bildsensor erzeugten Signale kann dabei nach Stand der Technik sowohl im Bildaufnehmer selbst als auch in der Auswerteeinheit erfolgen. Auf diese Weise können erforderliche Bildanalysealgorithmen in Form von fest oder frei programmierbarer Software implementiert werden.

Der Körper wird dabei derart angeordnet, dass der zu untersuchende Bereich möglichst in der Fokalebene des Bildaufnehmers, also in dem Erfassungsbereich, liegt, um die Defekte scharf erfassen zu können.

Durch die Wahl der Tiefenschärfe des Bildaufnehmers kann in bevorzugten Ausführungsformen der erfindungsgemäßen Vorrichtung gezielt eingestellt werden, ob der gesamte Körper scharf abgebildet wird oder nur ein Abschnitt des Körpers, wie zum Beispiel die dem Bildaufnehmer zugewandte Vorderseite bzw. Wandung des Körpers.

In einer ersten Ausführungsform beträgt die Tiefenschärfe des auf den Körper fokussierten Bildaufnehmers wenigstens 1 cm, vorzugweise wenigstens 3 cm und besonders bevorzugt wenigstens 10 cm. Durch Wahl dieser relativ großen Tiefenschärfe können im Allgemeinen gleichzeitig Defekte auf der dem Bildaufnehmer zugewandte Vorderseite des Körpers als auch auf der dem Bildaufnehmer abgewandten Rückseite des Körpers scharf abgebildet und analysiert werden. Die rechnerische Auswertung der erhaltenen Bilder erfordert jedoch eine relativ hohe Rechenleistung der Auswerteeinheit, da insgesamt mehr Defekte auf den Bildern vorhanden sind, und zwischen Defekten auf der Vorderseite und der Rückseite unterschieden werden muss. Die Unterscheidung zwischen Defekten auf der Vorderseite und der Rückseite kann aufgrund ihrer Bewegungsrichtung bei Drehung des Körpers erfolgen.

Für Hohlkörper mit vorgegebener Wandstärke des Körpers kann die Tiefenschärfe des auf den Körper fokussierten Bildaufnehmers aber auch in einer weiteren Ausführungsform bevorzugt so ausgewählt werden, dass das Verhältnis der Tiefenschärfe zu der Wandstärke des Körpers kleiner als 5, bevorzugt kleiner als 2, besonders bevorzugt kleiner als 1,5 ist. Bei einer derartig eingestellten Tiefenschärfe kann nur die vorderseitige Wandung des Hohlkörpers scharf abgebildet werden, die rückseitige Wandung wird bereits optisch ausgeblendet. Dadurch kann der benötigte Rechenaufwand für die Auswertung erheblich reduziert werden, zumal eine Unterscheidung von Fehlern auf der Vorderseite und der Rückseite entfällt. Es kommt auch nicht zu Überlagerungen von Fehlern auf der Vorderseite und der Rückseite, wie es bei sehr großer Tiefenschärfe bei bestimmten Drehwinkeln vorkommen kann. Die Vorderseite des Körpers kann also separat betrachtet werden.

Alternativ beträgt in einer weiteren Ausführungsform der Inspektionsvorrichtung die Tiefenschärfe des auf den Körper fokussierten Bildaufnehmers weniger als 1 cm, bevorzugt weniger als 0,5 cm, besonders bevorzugt weniger als 2 mm beträgt.

Sowohl die Wahl einer in Bezug auf den zu analysierenden Körper geringen Tiefenschärfe als auch die Wahl einer großen Tiefenschärfe weisen daher verschiedene Vorteile auf und können auch in Abhängigkeit der zur Verfügung stehenden Rechenleistung der Auswerteinheit sowie dem gewünschten Umfang der Analyse bevorzugt sein.

Bei dickwandigen Bauteilen können auch mehrere umlaufende Bildreihen bei verändertem Abstand zwischen Körper und Bildaufnehmer oder bei in Richtung der optischen Achse unterschiedlich liegenden Fokalebene durchgeführt werden, um auf diese Weise unterschiedliche Tiefenbereiche des Körpers scharf abbilden zu können.

In einer bevorzugten Ausführungsform rotiert der Körper während der Untersuchung. Hierzu kann eine geeignete Drehvorrichtung, beispielsweise ein Drehteller, vorgesehen sein, der den Körper während der Untersuchung kontinuierlich rotieren lässt. Damit können der Bildaufnehmer und/oder die Beleuchtungseinrichtung weitgehend ortsfest gehalten werden, was im allgemeinen einen einfacheren Aufbau bedeutet.

Es sind jedoch auch Rotationen realisierbar durch Rotieren des Bildaufnehmers oder eine virtuelle Rotation durch mehrere Bildaufnehmer, angeordnet im Winkelschritt.

Die Rotationsgeschwindigkeit ist dabei derart ausgewählt und in Übereinstimmung mit den Auslöseparametern des Bildaufnehmer gebracht, dass die Aufnahme scharfer Bilder von dem Körper in der Fokalebene ermöglicht. Demnach ist die Rotationsgeschwindigkeit des Körpers mit der Bildaufnahmerate des Bildaufnehmers abgestimmt. Ein weiteres Kriterium stellt die Auslösezeit dar, also die Zeit, die zwischen zwei aufeinanderfolgenden Bildern verstreicht. Diese ist häufig systembedingt von dem optischen System vorgegeben.

Demnach wird die Bildaufnahmerate, also die Anzahl der pro Zeiteinheit aufgenommenen Bilder, in Abhängigkeit von der Rotationsgeschwindigkeit des Körpers so ausgewählt, dass einerseits der Körper in der Fokalebene möglichst scharf erscheint, andererseits aber auch die Zeit für die Untersuchung nicht zu lange dauert. Hierfür erweisen sich im Allgemeinen Bildaufnehmer mit einer Bildaufnahmerate ab etwa 10 Bildern pro Sekunde als zweckmäßig, um eine ausreichend hohe Rotationsgeschwindigkeit zu ermöglichen.

Um eine vollständige Abbildung des Körpers durch die Differenzbilder mit einem hinreichenden Überlapp zu erreichen, ist es hilfreich, bei einer vollständigen Umdrehung des Körpers eine bestimmte Anzahl an aufeinanderfolgenden Bildern aufzunehmen. Bei einer 360°-Rotation eines Körpers mit einem Durchmesser von 5 mm oder mehr sollten daher wenigstens 36 Bilder aufgenommen werden, was bedeutet, dass sich eine erste Drehposition um 10° von einer nachfolgenden Drehposition unterscheidet. Der Drehwinkel des Körpers in Relation zu dem Bildaufnehmer ändert sich demnach um 10° pro Aufnahme, so dass die erste Einzelaufnahme bei 0° und die zweite bei 10° erfolgt. Noch genauere Informationen können gewonnen werden, wenn sich der Drehwinkel des Körpers von einer ersten Aufnahme zu einer nachfolgenden Aufnahme um nicht mehr als 5°, bevorzugt nicht mehr als 2° und besonders bevorzugt nicht mehr als 1 ° ändert. Dies ist besonders bei größeren Körpern mit einem Durchmesser von etwa 20 mm oder darüber günstig.

In Abhängigkeit von der Rotationsgeschwindigkeit kann es aufgrund der kontinuierlichen Rotation des Körpers während der Aufnahme der Bilder zu einer Bewegungsunschärfe, dem sogenannten "motion blur"-Effekt, kommen. Für die Erzeugung des Differenzbildes können derartige Effekte mit geeigneten Algorithmen herausgerechnet werden, um die Auswertung zu verbessern. Es ist somit vorlteihaft, wenn die Bewegungsunschärfe des Bildes bei der Fehleranalyse herausgerechnet wird.

Zur Analyse des Differenzbildes wird der laterale Versatz eines Objektes bei aufeinanderfolgenden Bildern in Relation zur Rotationsgeschwindigkeit des Körpers ausgewertet.

Bei besonders bevorzugten Ausführungsformen des Verfahrens beträgt der Drehwinkel des Körpers zwischen zwei aufeinanderfolgenden Drehpositionen nicht mehr als 20°, nicht mehr als 10°, vorzugsweise nicht mehr als 5°, bevorzugt nicht mehr als 2° und besonders bevorzugt nicht mehr als 1° beträgt.

Das Verfahren zur optischen Untersuchung sieht vor, dass die Drehung des Körpers während der Aufnahmen kontinuierlich erfolgt.

Vorzugsweise strahlt die von der Beleuchtungseinrichtung umfasste Strahlquelle monochromatische Strahlung ab, so dass sich im aufgenommenen Bild dunkel scheinende Fehler, etwa Partikel, kontrastreich erkennen lassen. Die Beleuchtung kann hierzu auch diffus ausgebildet sein. Die Strahlquelle kann auch weißes Licht abgeben oder abstrahlen.

In einer Weiterbildung der Erfindung ist es auch möglich, den Körper mit unterschiedlicher Strahlung zu beaufschlagen und bei verschiedenen Wellenlängen zu untersuchen, um etwa zusätzlich zu Grauwert- oder Farbbildern auch IR-Bilder aufnehmen zu können.

Zu jedem aufgenommenen Bild können zugleich Informationen über den Zeitpunkt der Aufnahme in der Rechnereinheit gespeichert werden. Zu jedem Zeitpunkt, zu dem der Bildsensor ein Bild aufnimmt, werden dann Informationen über die Drehposition und den Abstand zwischen dem Körper und dem Bildaufnehmer rechnerisch hinterlegt.

Defekte, beispielsweise Oberflächenbeschädigungen wie Kratzer oder Risse, aber auch im Volumen liegende Fehler wie etwa eingeschlossene Blasen bei Glas- oder Glaskeramikkörpern, führen im aufgenommenen Bild zu Hell-/ Dunkelabweichungen. Im digitalen Bild bzw. im erzeugten Differenzbild führt dieses zu Unterschieden benachbarter Pixel oder Pixelbereiche, wobei diese Unterschiede rechnerisch mit geeigneten Algorithmen analysiert werden können.

Vorzugsweise strahlt die von der Beleuchtungseinrichtung umfasste Strahlquelle monochromatische Strahlung ab, so dass sich im aufgenommenen Bild dunkel scheinende Fehler, etwa Partikel, kontrastreich erkennen lassen. Die Beleuchtung kann hierzu auch diffus ausgebildet sein. Die Strahlquelle kann auch weißes Licht abgeben oder abstrahlen.

In einer Weiterbildung der Erfindung ist es auch möglich, den Körper mit unterschiedlicher Strahlung zu beaufschlagen und bei verschiedenen Wellenlängen zu untersuchen, um etwa zusätzlich zu Grauwert- oder Farbbildern auch IR-Bilder aufnehmen zu können.

Zu jedem aufgenommenen Bild können zugleich Informationen über den Zeitpunkt der Aufnahme in der Rechnereinheit gespeichert werden. Zu jedem Zeitpunkt, zu dem der Bildsensor ein Bild aufnimmt, werden dann Informationen über die Drehposition und den Abstand zwischen dem Körper und dem Bildaufnehmer rechnerisch hinterlegt.

Defekte, beispielsweise Oberflächenbeschädigungen wie Kratzer oder Risse, aber auch im Volumen liegende Fehler wie etwa eingeschlossene Blasen bei Glas- oder Glaskeramikkörpern, führen im aufgenommenen Bild zu Hell-/ Dunkelabweichungen. Im digitalen Bild bzw. im erzeugten Differenzbild führt dieses zu Unterschieden benachbarter Pixel oder Pixelbereiche, wobei diese Unterschiede rechnerisch mit geeigneten Algorithmen analysiert werden können.

Auf diese Weise können Defekte an dem Körper, aber auch Abweichungen von einer vorgegebenen Sollkontur, untersucht werden. So können auch Informationen über die räumliche Ausdehnung eines Defektes wie eines Kratzers oder Risses, also beispielsweise die Position, die Länge, die Breite und/oder die Tiefe bestimmt werden.

Es können auch Defekte unter der Oberfläche des Körpers etwa im Materialvolumen eingeschlossene Schlieren, geschlossene Blasen oder eingeschlossene Fremdpartikel, identifiziert werden. Die Auswertung kann Informationen zu der Position des Defekts auf oder in dem Körper und seine räumliche Ausdehnung berechnen.

Demgemäß umfasst die Erfindung in einem weiteren Aspekt auch eine Inspektionsvorrichtung zur optischen Untersuchung von Körper, vorzugsweise transparenten Körpers, umfassend zumindest einen optischen Bildaufnehmer sowie eine Rechnereinheit, zur Durchführung einer optischen Untersuchung wie vorstehend beschrieben. Ferner kann zumindest eine Beleuchtungseinrichtung zur Beleuchtung des Körpers vorgesehen sein. Günstigerweise ist weiterhin eine Aufnahmemöglichkeit zur Positionierung und Halterung des zu untersuchenden Körpers vorgesehen, die als Drehvorrichtung ausgebildet sein kann. Dies kann beispielsweise ein Drehteller sein, auf den der Körper aufgestellt werden kann und der die Rotationsbewegung vollführt.

Die beschriebene Inspektionsvorrichtung zur optischen Untersuchung ist weiterhin ausgebildet zur Durchführung der folgenden Schritte:
a) Erstellen einer ersten Einzelaufnahme von dem Körper und Übertragen als digitales Bild an die Rechnereinheit, wobei das Bild als Referenzbild dient,
b) Rotieren des Körpers um einen vorbestimmten Drehwinkel bis zum Erreichen einer vorbestimmten nachfolgenden Drehposition,
c) Erstellen einer darauffolgenden, weiteren Einzelaufnahme von dem Körper bei dieser Drehposition, und Übertragen der zweiten Einzelaufnahme als digitales weiteres Bild an die Rechnereinheit,
d) Rechnerisches Vergleichen des Referenzbildes mit dem weiteren Bild durch Subtrahieren der Bilder zur Erzeugung eines Differenzbildes,
e) Rechnerisches Abwickeln des Differenzbildes durch Auffalten,
f) Analysieren des aufgefalteten Differenzbildes durch die Rechnereinheit, wobei zur Analyse des Differenzbildes der laterale Versatz eines Objekts bei aufeinanderfolgenden Bildern in Relation zur Rotationsgeschwindigkeit des Körpers ausgewertet wird,
g) Wiederholen der vorstehenden Schritte b) bis f), wobei jeweils das weitere Bild als Referenzbild genommen wird, bis zumindest einer vollständigen Rotation des Körpers.

Die Erfindung wird nachfolgend genauer anhand der beigeschlossenen Figuren erläutert.

Es zeigen:
Fig. 1 schematisch einen Ausschnitt einer Inspektionsvorrichtung zur optischen Untersuchung in einer Schrägansicht,
Fig. 2 ein pharmazeutisches Packmittel aus Glas in einer Schrägansicht,
Fig. 3 schematisch die Aufnahme eines Fehlers während einer Rotation durch einen Bildaufnehmer in einer Draufsicht, und
Fig. 4 schematisch den Ablauf einer Untersuchung eines pharmazeutischen Packmittels aus Glas mit unterschiedlichen Fehlern.

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

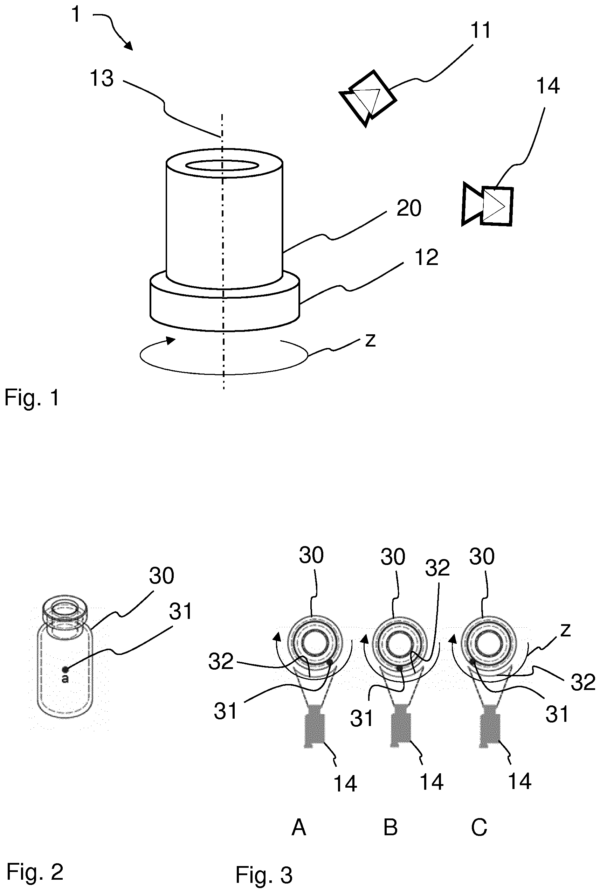

Die Fig. 1 zeigt schematisch einen Ausschnitt einer im Ganzen mit dem Bezugszeichen 1 versehene Inspektionsvorrichtung zur optischen Untersuchung und Inspektion von Körpern.

Die Erfindung stellt ein Inspektionsverfahren und eine Inspektionsvorrichtung zur Qualitätskontrolle von transparenten Körpern, welche vorzugsweise rotationssymmetrisch ausgebildet sind, zur Verfügung. Besonders geeignet ist es für die Untersuchung von transparenten Kunststoff-, Glas- oder Glaskeramikkörpern, welche sowohl massiv als auch hohlwandig ausgebildet sein können.

Vorzugsweise können dies Behälter, sogenannte Container, oder Verpackungen für die Pharmazie sein, etwa Glasspritzen oder Glasampullen. Während der Inspektion wird der zu untersuchende Körper um eine Rotationsachse gedreht, wobei mit einem Bildaufnehmer die gesamte Oberfläche des Körpers durch eine Vielzahl von aufeinanderfolgenden Einzelaufnahmen des bildgebenden Systems zu jeweils unterschiedlichen Winkelschritten des Körpers erfasst wird.

Die Anzahl der Einzelaufnahmen pro Winkelschritt bzw. die Gesamtanzahl an Einzelaufnahmen pro vollständiger Umdrehung des Körpers um die Rotationsachse wird dabei so ausgewählt, dass die aufeinanderfolgenden Einzelaufnahmen überlappen, um sich überlappende Informationen zu erhalten.

Hierbei wird die überlappende Information genutzt, um zusätzliche Information für die Auswertung bereitzustellen, insbesondere, um störende Hintergrundinformationen digital unterdrücken zu können, etwa Rauschen, Reflexionen oder Verunreinigungen. Es können Fehler, die im Zusammenhang mit der Rotation auftreten, von solchen unterschieden werden, die nicht in Zusammenhang mit einer Rotation stehen.

Auf diese Weise können Verunreinigungen der Inspektionsvorrichtung von Fehlern des Glaskörpers unterschieden werden. Durch die Rotationsrichtung kann ferner unterschieden werden, ob ein Fehler auf der Vorder- oder der Rückseite des Körpers auftritt. Somit können Doppelbeurteilungen vermieden werden. Schließlich lassen sich aus der Analyse der Rotationsgeschwindigkeit des Körpers weitere Information über den Fehler erhalten, um die Ausdehnung oder die Fehlerart zu analysieren.

Die Inspektionsvorrichtung 1 erlaubt es, den zu untersuchenden Körper mit einem bildgebenden System optisch zu erfassen, um den Körper auf mögliche Fehler oder Defekte zu untersuchen.

Im in Fig. 1 gezeigten Beispiel handelt es sich bei dem zu untersuchenden Körper um einen Abschnitt eines Glasrohres 20. Der Körper ist rotationssymmetrisch in Bezug auf seine Symmetrieachse 13 ausgebildet, die gleichzeitig als Rotationsachse während der Rotation dient. Die Rotation erfolgt in die mit "Z" gekennzeichnete Drehrichtung, wobei selbstverständlich auch die Gegenrichtung möglich ist.

Die Inspektionsvorrichtung 1 umfasst eine Aufnahmeeinrichtung, vorzugsweise eine Drehvorrichtung zum Rotieren des Körpers, im Beispiel einen Drehteller 12, zum Halten und Positionieren des Körpers 20, auf dem der Körper 20 zur Inspektion so angeordnet wird, dass die Symmetrieachse des Körpers 20 mit der Rotationsachse der Aufnahmeeinrichtung miteinander fluchten.

Ferner verfügt die Vorrichtung über zumindest einen optischen Bildaufnehmer 14, der im Beispiel so angeordnet ist, dass er einen Ausschnitt der Mantelfläche des Körpers bei Rotation aufnehmen kann. Die Anordnung des Bildaufnehmers 14 erfolgt dabei derart, dass der zu untersuchende Bereich des Körpers 20 im Erfassungsbereich des Bildaufnehmers 14 liegt. Im Beispiel ist dies der Teilbereich der Mantelfläche des Körpers 20. Selbstverständlich kann der Bildaufnehmer 14 auch anders angeordnet sein, um beispielsweise den Boden oder den Übergangsbereich zwischen Boden und Seitenwand zu untersuchen. Es ist auch möglich, mehrere unterschiedlich angeordnete Bildaufnehmer 14 parallel zu verwenden, die jeweils einen bestimmten Bereich des Körpers aufnehmen, wobei die nachfolgende Analyse dann für die erzeugten Bilder jedes Bildaufnehmers durchgeführt werden kann.

Der Bildaufnehmer 14 umfasst einen Bildsensor mit einer Matrixkamera oder Mehrzeilen-Kamera. Das optische System des Bildaufnehmers 14 umfasst weitere optische Einrichtungen wie Linsen, welche der Übersichtlichkeit halber nicht abgebildet sind.

Bei rotationssymmetrischen Körpern ergibt sich der große Vorteil, dass bei Rotation um die Symmetrieachse 13 ein konstanter Abstand der Körperoberfläche zu dem Bildaufnehmer 14 eingehalten werden kann, so dass bei einer entsprechenden Scharfstellung des Bildaufnehmers auf die Mantelfläche des Körpers 20 diese bei sämtlichen Aufnahmen gleich scharf aufgenommen werden kann.

Ferner ist bevorzugt eine Beleuchtungseinrichtung 11 vorgesehen, um den Körper während der Untersuchung zu beleuchten welche in diesem Beispiel monochromatisches Licht auf den Körper abstrahlt. Die Strahlquelle der Beleuchtungseinrichtung 11 ist dabei vom Körper 20 aus gesehen auf der gleichen Seite wie der Bildaufnehmer 14 angeordnet. Auf diese Weise können Bilder im Auflicht-Betrieb aufgenommen werden.

Selbstverständlich sind auch andere Anordnungen der Beleuchtungseinrichtung möglich. Denkbar ist bei hohlwandigen, nach oben offenen Körpern beispielsweise eine Beleuchtung, welche in dem Hohlraum des Körpers angeordnet ist und von oben durch die Öffnung in den Körper hineinragt. Denkbar ist auch eine Beleuchtung, welche auf der dem Bildaufnehmer 14 gegenüberliegenden Seite des Körpers angeordnet ist, so dass sie Strahlung in Richtung des Bildaufnehmers abgibt. In diesem Fall ist eine Analyse in Durchlicht möglich.

Während der Aufnahme der Einzelbilder rotiert der Körper 20 kontinuierlich um die Rotationsachse 13. Der Körper ist dabei in Bezug auf den Bildaufnehmer derart beabstandet, dass die Fokaleebene des Bildaufnehmers die Mantelfläche des Körpers zumindest berührt oder schneidet.

Im in Fig. 1 gezeigten Beispiel handelt es sich bei dem Körper um einen Hohlkörper mit einer seitlichen Wandung.

Um auch Fehler im Volumen des Körpers und auf seiner innenliegenden Oberfläche mit Bildaufnehmer hinreichend klar aufnehmen zu können, kann in diesem Beispiel ein Bildaufnehmer mit einer größeren Tiefenschärfe verwendet werden. Idealerweise ist die Tiefenschärfe dabei in Abhängigkeit von dem zu untersuchenden Volumen des Körpers bzw. der Dicke der Seitenwand bei Hohlkörpern so gewählt, dass möglichst der gesamte Volumenbereich des Körpers im Aufnahmebereich scharf abgebildet werden kann.

Es kann aber auch in einer anderen Ausführungsform ein Bildaufnehmer mit einer geringeren Tiefenschärfe verwendet werden, etwa um Rechenzeit zu sparen oder in Fällen, wo nur Teilbereiche des Körpers, etwa eine Außenseite, analysiert werden sollen.

Fig. 2 zeigt exemplarisch ein transparentes, pharmazeutisches Packmittel, im Beispiel einen Behälter, insbesondere ein Fläschchen 30 aus Borosilikatglas, in einer Schrägansicht. Die Fläschchen 30 weist einen Fehler 31 auf, der sich im Beispiel auf der Mantelfläche der Fläschchen 30 befindet. Hierbei handelt es sich um einen auf der Oberfläche aufliegenden Partikel. In gleicher Weise kann es sich aber auch einen im Volumen des Glaskörpers liegenden Defekt handeln, etwa einen Fremdeinschluss eines Partikels in dem Glas oder eine im Volumen liegende, eingeschlossene Blase.

Fig. 3 zeigt in einer Draufsicht schematisch drei unterschiedliche Anordnungen von Körper 30 und Bildaufnehmer 14 relativ zueinander zur Aufnahme dreier aufeinanderfolgender Bilder. Die relative Anordnung zueinander unterscheidet sich bei den Anordnungen durch eine Rotation des Körpers 30 in einer mit "Z" gekennzeichneten Richtung, so dass seine Orientierung relativ zum Bildaufnehmer jeweils unterschiedlich ist.

Der Bildaufnehmer 14 ist so angeordnet, dass er zu untersuchende Mantelbereich des Körpers 30 in dem Erfassungsbereich 32 des ortsfesten Bildaufnehmers 14 liegt. Der Übersichtlichkeit halber ist die Beleuchtungseinrichtung nicht eingezeichnet.

Während der Rotation nimmt der Bildaufnehmer Bilder von dem Körper 30 auf, wobei sich die Drehposition, also die Orientierung des Körpers 30 in Bezug auf den Bildaufnehmer 14, jeweils ändert. Im abgebildeten Beispiel sind drei unterschiedliche Drehpositionen mit den Buchstaben "A", "B" und "C" gekennzeichnet.

Bei der mit "A" gekennzeichneten Drehposition liegt der Fehler 31 im in Bildaufnahmerichtung entlang der optischen Achse gesehen rechten Erfassungsbereich 32 des Bildaufnehmers 14 und damit im rechten Bildbereich. Bei dieser Drehposition wird ein erstes Bild durch den Bildaufnehmer 14 erzeugt. Nach einer Rotation des Körpers 30 um etwa 30° rotiert auch der Fehler 31 auf der Mantelfläche und liegt bei einer mit "B" gekennzeichneten Drehposition etwa mittig im Bildbereich. Nach einer weiteren Drehung um etwa 30° liegt der Fehler 31 etwa im linken Bildbereich.

Erfindungsgemäß wird bei den drei Drehpositionen "A", "B" und "C" jeweils ein Bild aufgenommen. Durch den Vergleich von jeweils zwei aufeinanderfolgend aufgenommenen Bildern, also der bei Drehposition "A" und "B" sowie bei "B" und "C" aufgenommenen Bildern, können auf diese Weise zwei Differenzbilder erzeugt werden. Da der Fehler 31 dem Körper 30 zugeordnet ist, ist seine Position auf jedem erzeugten Bild infolge der Rotation des Körpers 30 unterschiedlich.

Da zur Erzeugung des Differenzbildes nur diejenigen Informationen herangezogen werden, die auf jeweils aufeinanderfolgenden Bildern unterschiedlich sind, so wird dieser Fehler 31 auf den beiden zugeordneten Differenzbildern ebenfalls abgebildet und kann mittels geeigneter Analyseverfahren ermittelt werden.

Im gezeigten Beispiel werden für einen Winkelbereich von etwa 60° (jeweils etwa 30° zwischen der Drehposition "A" und "B" sowie zwischen der Drehposition "B" und "C") nur insgesamt drei Bilder erzeugt, was im Wesentlichen der übersichtlicheren Darstellung geschuldet ist.

Es hat sich gezeigt, dass eine deutlich kürzere Bildfolge mit geringeren Drehwinkeln zwischen zwei aufeinanderfolgenden Drehpositionen zu deutlich besseren Untersuchungsergebnissen mit höherer Auswertegenauigkeit führt, da die geometrischen Informationen über den Fehler, etwa die exakte Länge eines Risses, genauer ermittelt werden können. Ein hinreichender Überlapp lässt sich im Allgemeinen bei Drehwinkeln von nicht mehr als 30°, nicht mehr als 20°, nicht mehr als 10°, vorzugsweise nicht mehr als 5°, bevorzugt nicht mehr als 2° und besonders bevorzugt nicht mehr als 1° erreichen.

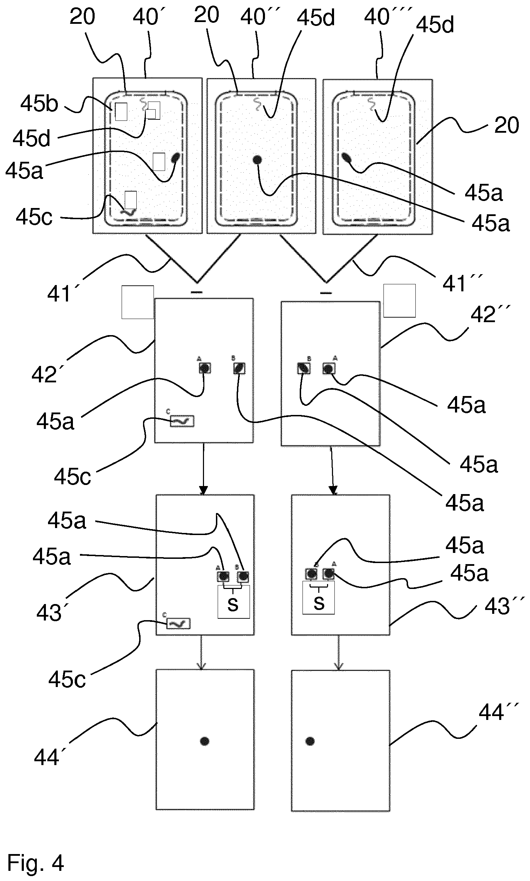

In Fig. 4 ist schließlich schematisch der beispielhafte Ablauf einer Untersuchung auf der Basis von drei aufeinanderfolgend aufgenommenen Bildern eines mit einem Innenvolumen ausgebildeten, pharmazeutischen Packmittels aus Glas 20 mit unterschiedlichen Fehlern dargestellt. Diese Fehler sind teilweise dem zu untersuchenden Körper 20 zugeordnet, teilweise aber auch dem optischen System oder der Umgebung.

Von dem Glaskörper 20 werden dabei wie in dem in Fig. 3 dargestellten Beispiel erläutert exemplarisch drei Einzelaufnahmen 40', 40" und 40"' bei drei aufeinanderfolgenden Drehpositionen aufgenommen. Der besseren Anschaulichkeit wegen beträgt der Winkel zwischen den jeweiligen Drehpositionen etwa 30°, wobei in der Praxis typischerweise deutlich geringere Winkel zwischen den Drehpositionen liegen.

In diesem Beispiel wird die Tiefenschärfe des Bildaufnehmers gezielt derart eingestellt, dass der gesamte Körper im Erfassungsbereich scharf abgebildet wird. Im Beispiel beträgt die Tiefenschärfe 3 cm, um den gesamten im Erfassungsbereich des Bildaufnehmers liegenden Abschnitt des Körpers zwischen seiner Symmetrieachse und dem Bildaufnehmer scharf darstellen zu können.

Die Rotationsgeschwindigkeit des Glaskörpers 20 wird dabei so gewählt, dass der Fehler auf mehreren Einzelbildaufnahmen, also auf mehreren aufeinander folgenden Bildern, erscheint. Aufeinanderfolgende Einzelbildaufnahmen weisen also einen Überlapp auf. Es hat sich als vorteilhaft herausgestellt, wenn dieser Überlapp wenigstens 50%, bevorzugt wenigstens 60% und besonders bevorzugt wenigstens 70% beträgt. Im abgebildeten Beispiel werden die exemplarischen Fehler in unterschiedlicher Weise auf drei aufeinanderfolgend aufgenommenen Einzelaufnahmen 40', 40" und 40'" dargestellt.

Die drei Abbildungen des Glaskörpers 40', 40" und 40'" weisen dabei im Beispiel die Defekte 45a, 45b, 45c und 45d auf, die unterschiedliche Ursachen haben und somit unterschiedlichen Klassen angehören. So betrifft der Defekt 45a einen Fehler auf oder in dem Glaskörper 20. Dies kann ein aufliegender oder auch im Volumen eingeschlossener Fremdpartikel sein.

Mit 45b ist ein Defekt gekennzeichnet, der auf jeder Einzelaufnahme 40', 40" und 40'" erscheint und einen Schatten und/oder Reflexe durch den Glaskörper (gestrichelte Linie) als Ursache hat. Derartige Fehler können beispielsweise durch Reflexe entstehen, die mit der Wandstärke des Glaskörpers 20 und/oder der Beleuchtung zusammenhängen.

Der Fehler 45c weist auf einen Fehler in der Umgebung hin. Dies kann beispielsweise ein Fussel in der Luft sein.

Schließlich ist mit dem Fehler 45d ein Defekt gekennzeichnet, der durch das optische System hervorgerufen wird, sich also in oder an dem Bildaufnehmer 14 befindet. Dies kann etwa ein Fussel sein, der auf einer Linse des Bildaufnehmers 14 aufliegt.

Das erfindungsgemäße Verfahren sieht vor, die Bilder von jeweils zwei aufeinanderfolgenden Einzelaufnahmen rechnerisch zu subtrahieren. Dabei bleiben nur diejenigen Informationen aus den beiden Bildern für eine weitere Auswertung erhalten, welche nicht identisch sind. Demnach werden also die aus zwei aufeinanderfolgend folgend aufgenommenen Einzelaufnahmen gewonnenen digitalen Bilder miteinander verglichen und diejenigen Informationen, die auf beiden Bildern identisch vorliegen, eliminiert, um auf diese Weise ein Differenzbild zu erhalten.

Im dargestellten Beispiel erfolgt also eine erste Subtraktion 41', um ein Differenzbild 42' aus den Bildern der Einzelaufnahmen 40' und 40" zu erzeugen. Eine weitere Subtraktion 41 " erfolgt, um ein weiteres Differenzbild 42" zu erhalten. Dieses Prinzip wird für alle Einzelbildaufnahmen durchgeführt, um eine umlaufende Untersuchung des Glaskörpers 20 zu ermöglichen.

Die Erzeugung des Differenzbildes 42', 42" führt zu einer Reduktion und Elimination von systembedingten Fehlern, also von Fehlern, die mit dem Bildaufnehmer 14 zusammenhängen oder durch die Bildaufnahme oder auch die Beleuchtung hervorgerufen werden.

Hierzu werden auch die Rotationsgeschwindigkeit des Körpers sowie die Zeitpunkte der jeweiligen Einzelbildaufnahme herangezogen. Rechnerisch wird dann die Geschwindigkeit der Körperoberfläche in Relation zu dem Bildaufnehmer 14 bestimmt, welche näherungsweise der Bahngeschwindigkeit eines Punktes auf einer dieser Oberfläche zugeordneten Bahnkurve entspricht, um hieraus den lateralen Versatz bei zwei aufeinanderfolgenden Bildern zu ermitteln, welchen ein Fehler auf oder in dem zu untersuchenden Körper erfahren wird.

Diese Weg-Zeit-Analyse ermöglicht es, Objekte auf den Bildern zu identifizieren, welche sich gemäß der Rotationsgeschwindigkeit des Körpers weiterbewegt haben. Das Vorhandensein dieser Objekte liegt damit in dem zu untersuchenden Körper begründet, wohingegen Objekte, die sich nicht in Korrelation mit der Rotationsgeschwindigkeit des Körpers weiterbewegt haben, andere Ursachen aufweisen.

Für die weitere Analyse werden diejenigen Objekte, die eine solche geschwindigkeitsproportionale Bewegung aufweisen, durch einen geeigneten Filter-Algorithmus hindurch gelassen. Dagegen werden für die weitere Analyse diejenigen Objekte aus dem Bild gelöscht, welche eine abweichende Geschwindigkeit aufweisen oder auf den Einzelaufnahmen ortsfest sind.

Im dargestellten Beispiel sind auf dem Differenzbild 42' lediglich noch die Fehler 45a und 45c dargestellt. Dabei wird der Fehler 45a zweimal angezeigt, da er an zwei unterschiedlichen Positionen der zugehörigen Einzelaufnahmen 40' und 40" angezeigt wird aufgrund der Rotation des Glaskörpers 20. Auch im Differenzbild 42" wird der Fehler 45a zweimal angezeigt, da auch zwischen den Einzelaufnahmen 40" und 40'" eine Rotation des Glaskörpers 20 erfolgt. Da der Fehler 45c auf beiden Einzelaufnahmen 40" und 40"' nicht existiert, wird er dagegen nicht angezeigt. Die Fehler 45b und 45d dagegen erscheinen auf den zugehörigen Einzelaufnahmen 40', 40" und 40'" jeweils an derselben Position. Rechnerisch werden sie daher nicht in die Differenzbilder 42' und 42" übernommen.

Die Differenzbilder 42', 42" werden nachfolgend rechnerisch zylindrisch aufgefaltet, woraufhin eine Objektanalyse mittels geeigneter Algorithmen in der Rechnereinheit erfolgt. Dieses entfaltete Rotationsbild kann nachfolgend auf Fehler analysiert werden.

Sogenannte Pseudofehler, also Fehler, die ihre Ursache nicht in oder auf dem zu untersuchenden Körper haben, können auf diese Weise eliminiert werden. Dies sind im digitalen Bild Pixel oder Pixelbereiche, die keinen lateralen Versatz gemäß der Weg-Zeit-Analyse aufweisen und somit einen größeren oder kleineren oder auch keinen seitlichen Versatz in ihrer Position von einer Einzelaufnahme zu einer nachfolgenden aufweisen.

Damit verbleiben für die Fehleranalyse lediglich diejenigen Fehler, die direkt mit dem Körper in Verbindung stehen. Auf diese Weise kann eine rasche und zuverlässige Untersuchung des Körpers realisiert werden, welche eine Informationen darüber erlaubt, ob der untersuchte Körper einen Defekt aufweist oder nicht.

## Patentansprüche

1. Verfahren zur optischen Untersuchung von Körpern (20), vorzugsweise von transparenten Körpern, umfassend die Verwendung eines optischen Bildaufnehmers (14) sowie einer Rechnereinheit, wobei
- der Körper während der Untersuchung mit dem zu untersuchenden Bereich in dem Erfassungsbereich des Bildaufnehmers (14) positioniert wird,
- der Körper (20) während der Untersuchung um eine Rotationsachse (13) gedreht wird,
- während der Drehung eine Vielzahl von sich zumindest teilweise überlappenden Einzelaufnahmen von dem Körper (20) mit dem Bildaufnehmer (14) aufgenommen werden,
- der Moment der Aufnahme einer Einzelaufnahme durch eine vorbestimmte Drehposition gekennzeichnet ist, die die Orientierung des Körpers (20) in Bezug auf den Bildaufnehmer (14) bestimmt,
aufweisend die folgenden Schritte:
a) Erstellen einer ersten Einzelaufnahme (40', 40", 40"') von dem Körper (20) und Übertragen als digitales Bild an die Rechnereinheit, wobei das Bild als Referenzbild dient,
b) Rotieren des Körpers (20) um einen vorbestimmten Drehwinkel bis zum Erreichen einer vorbestimmten nachfolgenden Drehposition,
c) Erstellen einer darauffolgenden, weiteren Einzelaufnahme (40', 40", 40'") von dem Körper (20) bei dieser Drehposition, und Übertragen der zweiten Einzelaufnahme als digitales weiteres Bild an die Rechnereinheit,
d) Rechnerisches Vergleichen des Referenzbildes mit dem weiteren Bild durch Subtrahieren der Bilder zur Erzeugung eines Differenzbildes (42', 42"),
e) Rechnerisches Abwickeln des Differenzbildes (42', 42") durch Auffalten, vorzugsweise zylindrisches Auffalten,
f) Analysieren des aufgefalteten Differenzbildes (42', 42") durch die Rechnereinheit, wobei zur Analyse des Differenzbildes (42', 42") der laterale Versatz eines Objektes bei aufeinanderfolgenden Bildern in Relation zur Rotationsgeschwindigkeit des Körpers ausgewertet wird,
g) Wiederholen der vorstehenden Schritte b) bis f), wobei jeweils das weitere Bild als Referenzbild genommen wird, bis zumindest einer vollständigen Rotation des Körpers (20).

2. Verfahren zur optischen Untersuchung nach vorstehendem Anspruch, **dadurch gekennzeichnet, dass** der Körper (20) zumindest abschnittsweise rotationssymmetrisch ausgebildet ist und die Rotationssachse mit der Symmetrieachse des Körpers (20) fluchtet.

3. Verfahren zur optischen Untersuchung nach einem der vorstehenden Ansprüche, **dadurch gekennzeichnet, dass** der Körper (20) Kunststoff, Glas oder Glaskeramik umfasst, vorzugsweise Borosilikatglas.

4. Verfahren zur optischen Untersuchung nach einem der vorstehenden Ansprüche, **dadurch gekennzeichnet, dass** der Körper (20) einen Rohrabschnitt oder einen Stababschnitt, oder einen Behälter oder ein Packmittel, vorzugsweise ein pharmazeutisches Packmittel, umfassend eine Spritze, eine Karpule, ein Fläschchen (30) oder eine Ampulle, umfasst.

5. Verfahren zur optischen Untersuchung nach einem der vorstehenden Ansprüche, **dadurch gekennzeichnet, dass** der Körper (20) einen Behälter aus Glas, vorzugsweise aus Borosilikatglas, umfasst.

6. Verfahren zur optischen Untersuchung nach einem der vorstehenden Ansprüche, **dadurch gekennzeichnet, dass** zur Analyse des Differenzbildes (42', 42") Objekte aus dem Differenzbild (42', 42") eliminiert werden, welche bei aufeinanderfolgenden Bildern an gleicher Position vorhanden sind.

7. Verfahren zur optischen Untersuchung nach einem der vorstehenden Ansprüche, **dadurch gekennzeichnet, dass** die Bewegungsunschärfe des Bildes bei der Fehleranalyse herausgerechnet wird.

8. Verfahren zur optischen Untersuchung nach einem der vorstehenden Ansprüche, **dadurch gekennzeichnet, dass** der Drehwinkel des Körpers (20) zwischen zwei aufeinanderfolgenden Drehpositionen nicht mehr als 20°, nicht mehr als 10°, vorzugsweise nicht mehr als 5°, bevorzugt nicht mehr als 2° und besonders bevorzugt nicht mehr als 1° beträgt.

9. Verfahren zur optischen Untersuchung nach einem der vorstehenden Ansprüche, **dadurch gekennzeichnet, dass** die Drehung des Körpers (20) während der Aufnahmen kontinuierlich erfolgt.

10. Verfahren zur optischen Untersuchung nach einem der vorstehenden Ansprüche, **dadurch gekennzeichnet, dass** der Bildaufnehmer (14) eine Matrixkamera oder Mehrzeilen-Kamera umfasst.

11. Verfahren zur optischen Untersuchung nach einem der vorstehenden Ansprüche, **dadurch gekennzeichnet, dass** zumindest eine Beleuchtungseinrichtung (11) vorgesehen ist, um den Körper (20) während der Untersuchung zu beleuchten.

12. Verfahren zur optischen Untersuchung nach vorstehendem Anspruch, **dadurch gekennzeichnet, dass** die Beleuchtungseinrichtung (11) eine Strahlquelle umfasst, welche elektromagnetische Strahlung im sichtbaren Wellenlängenbereich und/oder im nahen IR und/oder im nahen UV abgibt.

13. Verfahren zur optischen Untersuchung nach einem der beiden vorstehenden Ansprüche, **dadurch gekennzeichnet, dass** die Strahlquelle monochromatische Strahlung abgibt.

14. Verfahren zur optischen Untersuchung nach einem der vorstehenden Ansprüche 11 oder 12, **dadurch gekennzeichnet, dass** die Strahlquelle weißes Licht abstrahlt.

15. Verfahren zur optischen Untersuchung nach einem der vorstehenden Ansprüche 11 bis 14, **dadurch gekennzeichnet, dass** die Beleuchtung diffus ausgebildet ist.

16. Inspektionsvorrichtung (1) zur optischen Untersuchung von Körpern (20), vorzugsweise von transparenten Körpern (20), umfassend
- zumindest einen optischen Bildaufnehmer (14),
- eine Rechnereinheit,
- zumindest eine Beleuchtungseinrichtung (11) zur Beleuchtung des Körpers sowie
- eine Drehvorrichtung (12) zum Rotieren des Körpers (20), ausgebildet zur Durchführung der folgenden Schritte:
a) Erstellen einer ersten Einzelaufnahme (40', 40", 40"') von dem Körper (20) und Übertragen als digitales Bild an die Rechnereinheit, wobei das Bild als Referenzbild dient,
b) Rotieren des Körpers (20) um einen vorbestimmten Drehwinkel bis zum Erreichen einer vorbestimmten nachfolgenden Drehposition,
c) Erstellen einer darauffolgenden, weiteren Einzelaufnahme (40', 40", 40'") von dem Körper (20) bei dieser Drehposition, und Übertragen der zweiten Einzelaufnahme als digitales weiteres Bild an die Rechnereinheit,
d) Rechnerisches Vergleichen des Referenzbildes mit dem weiteren Bild durch Subtrahieren der Bilder zur Erzeugung eines Differenzbildes (42', 42"),
e) Rechnerisches Abwickeln des Differenzbildes (42', 42") durch Auffalten, vorzugsweise zylindrisches Auffalten,
f) Analysieren des aufgefalteten Differenzbildes (42', 42") durch die Rechnereinheit, wobei zur Analyse des Differenzbildes (42', 42") der laterale Versatz eines Objektes bei aufeinanderfolgenden Bildern in Relation zur Rotationsgeschwindigkeit des Körpers ausgewertet wird,
g) Wiederholen der vorstehenden Schritte b) bis f), wobei jeweils das weitere Bild als Referenzbild genommen wird, bis zumindest einer vollständigen Rotation des Körpers (20).

17. Inspektionsvorrichtung (1) zur optischen Untersuchung nach vorstehendem Anspruch, wobei die Tiefenschärfe des auf den Körper (20) fokussierten Bildaufnehmers (14) wenigstens 1 cm, vorzugweise wenigstens 3 cm und besonders bevorzugt wenigstens 10 cm beträgt.

18. Inspektionsvorrichtung (1) zur optischen Untersuchung nach Anspruch 16, wobei die Tiefenschärfe des auf den Körper (20) fokussierten Bildaufnehmers weniger als 1 cm, bevorzugt weniger als 0,5 cm, besonders bevorzugt weniger als 2 mm beträgt.

19. Inspektionsvorrichtung (1) zur optischen Untersuchung nach Anspruch 16, wobei die Tiefenschärfe des auf den Körper (20) fokussierten Bildaufnehmers (14) ausgewählt ist in Abhängigkeit von der Wandstärke des Körpers (20), und wobei das Verhältnis der Tiefenschärfe zu der Wandstärke des Körpers (20) kleiner als 5, bevorzugt kleiner als 2, besonders bevorzugt kleiner als 1,5 ist.

## Claims

1. A method for optical examination of bodies (20), preferably of transparent bodies, comprising the use of an optical imaging device (14) and of a computer unit, wherein
- the body is positioned with its area to be examined within the capture range of the imaging device (14) during the examination;
- the body (20) is rotated about an axis of rotation (13) during the examination;
- while being rotated, a plurality of at least partially overlapping individual images of the body (20) are captured using the imaging device (14);
- the time of capturing an individual image is defined by a predetermined rotational position which determines the orientation of the body with respect to the imaging device (14);
comprising the steps of:
a) generating a first individual image (40', 40", 40'") of the body (20) and transmitting it to the computer unit as a digital image, said image being used as a reference image;
b) rotating the body (20) about a predetermined angle of rotation until reaching a predetermined subsequent rotational position;
c) generating a subsequent further individual image (40', 40", 40"') of the body (20) at this rotational position, and transmitting the second individual image to the computer unit as a further digital image;
d) computationally comparing the reference image with the further image by subtracting the images to produce a difference image (42', 42");
e) computationally developing the difference image (42', 42") by unfolding, preferably cylindrical unfolding;
f) analyzing the unfolded difference image (42', 42"), by the computer unit, wherein for analyzing the difference image (42', 42"), the lateral offset of a feature in successive images is evaluated in relation to the rotational velocity of the body;
g) repeating the above steps b) through f) while taking the respective further image as a reference image until at least one complete rotation of the body (20) has been completed.

2. The method for optical examination according to the preceding claim,
**characterised in that** the body (20) has a rotationally symmetrical shape at least in portions thereof, and wherein the axis of rotation is aligned with the axis of symmetry of the body (20).

3. The method for optical examination according to any one of the preceding claims,
**characterised in that** the body (20) comprises plastic, glass, or glass ceramic, preferably borosilicate glass.

4. The method for optical examination according to any one of the preceding claims,
**characterised in that** the body (20) comprises a tubular portion or a rod portion or a container or a packaging, preferably a pharmaceutical packaging comprising a syringe, a cartridge, a vial (30), and an ampoule.

5. The method for optical examination according to any one of the preceding claims,
**characterised in that** the body (20) comprises a container made of glass, preferably of borosilicate glass.

6. The method for optical examination according to any one of the preceding claims,
**characterised in that**, for analyzing the digital image (42', 42"), features that are located at the same position in successive images are eliminated from the digital image (42', 42").

7. The method for optical examination according to any one of the preceding claims,
**characterised in that** motion blur of the image is computationally eliminated in the analysis for defects.

8. The method for optical examination according to any one of the preceding claims,
**characterised in that** the angle of rotation of the body (20) between two successive rotational positions is not more than 20°, not more than 10°, preferably not more than 5°, more preferably not more than 2°, and most preferably not more than 1°.

9. The method for optical examination according to any one of the preceding claims,
**characterised in that** the body (20) is rotated continuously during the image capturing.

10. The method for optical examination according to any one of the preceding claims,
**characterised in that** the imaging device (14) comprises a matrix camera or a multi-line camera.

11. The method for optical examination according to any one of the preceding claims,
**characterised in that** at least one illumination device (11) is provided for illuminating the body (20) during the examination.

12. The method for optical examination according to the preceding claim,
**characterised in that** the illumination device (11) comprises a beam source which emits electromagnetic radiation in the visible wavelength range and/or in the near IR and/or in the near UV.

13. The method for optical examination according to any one of the two preceding claims,
**characterised in that** the beam source emits monochromatic radiation.

14. The method for optical examination according to any one of the preceding claims 11 or 12,
**characterised in that** the beam source emits white light.

15. The method for optical examination according to any one of the preceding claims 11 to 14,
**characterised in that** the illumination is diffuse.

16. An inspection device (1) for optical examination of bodies (20), preferably of transparent bodies (20), comprising:
- at least one optical imaging device (14);
- a computer unit;
- at least one illumination device (11) for illuminating the body (20); and
- a rotating device (12) for rotating the body (20);
adapted for performing the steps of:
a) generating a first individual image (40', 40", 40'") of the body (20) and transmitting it to the computer unit as a digital image, said image being used as a reference image;
b) rotating the body (20) about a predetermined angle of rotation until reaching a predetermined subsequent rotational position;
c) generating a subsequent further individual image (40', 40", 40'") of the body (20) at this rotational position, and transmitting the second individual image to the computer unit as a further digital image;
d) computationally comparing the reference image with the further image by subtracting the images to produce a difference image (42', 42");
e) computationally developing the difference image (42', 42") by unfolding, preferably cylindrical unfolding;
f) analyzing the unfolded difference image (42', 42") by the computer unit, wherein for analyzing the difference image (42', 42"), the lateral offset of a feature in successive images is evaluated in relation to the rotational velocity of the body;
g) repeating the above steps b) through f) while taking the respective further image as a reference image until at least one complete rotation of the body (20) has been completed.

17. The inspection device (1) for optical examination according to the preceding claim, wherein the depth of focus of the imaging device (14) focused on the body (20) is at least 1 cm, preferably at least 3 cm, and more preferably at least 10 cm.

18. The inspection device (1) for optical examination according to claim 16, wherein the depth of focus of the imaging device focused on the body (20) is less than 1 cm, preferably less than 0.5 cm, more preferably less than 2 mm.

19. The inspection device (1) for optical examination according to claim 16, wherein the depth of focus of the imaging device (14) focused on the body (20) is selected as a function of the wall thickness of the body (20), and wherein the ratio of the depth of focus to the wall thickness of the body (20) is less than 5, preferably less than 2, most preferably less than 1.5.

## Revendications

1. Procédé d'examen optique de corps (20), de préférence de corps transparents, comprenant l'utilisation d'un système de prise d'images (14) optique ainsi qu'une unité de calcul, dans lequel
- le corps est positionné pendant l'examen avec la zone à examiner dans la zone de détection du système de prise d'images (14),
- le corps (20) est tourné autour d'un axe de rotation (13) pendant l'examen,
- pendant la rotation, une pluralité de prises individuelles, se chevauchant au moins en partie, du corps (20) sont prises avec le système de prise d'images (14),
- le moment de la prise d'une prise individuelle est **caractérisé par** une position de rotation prédéfinie, qui définit l'orientation du corps (20) par rapport au système de prise d'images (14),
présentant les étapes suivantes :
a) de création d'une première prise individuelle (40', 40", 40"') du corps (20) et de transmission de celle-ci en tant qu'image numérique à l'unité de calcul, dans lequel l'image fait office d'image de référence,
b) de rotation du corps (20) autour d'un angle de rotation prédéfini jusqu'à atteindre une position de rotation suivante prédéfinie,
c) de création d'une autre prise individuelle (40', 40", 40"') consécutive du corps (20) dans cett position de rotation, et de transmission de la deuxième prise individuelle en tant qu'autre image numérique à l'unité de calcul,
d) de comparaison par calcul de l'image de référence à l'autre image par soustraction des images pour produire une image différentielle (42', 42"),
e) de déroulement par calcul de l'image différentielle (42', 42") par dépliage, de préférence par dépliage cylindrique,
f) d'analyse de l'image différentielle (42', 42'') dépliée par l'unité de calcul, dans lequel pour l'analyse de l'image différentielle (42', 42"), le décalage latéral d'un objet est évalué dans des images consécutives en relation avec la vitesse de rotation du corps,
g) de répétition des étapes ci-avant b) à f), dans lequel respectivement l'autre image est prise en tant qu'image de référence jusqu'à au moins une rotation complète du corps (20).

2. Procédé d'examen optique selon la revendication précédente, **caractérisé en ce que** le corps (20) est réalisé au moins par endroits de manière symétrique en rotation, et l'axe de rotation est en affleurement avec l'axe de symétrie du corps (20).

3. Procédé d'examen optique selon l'une quelconque des revendications précédentes, **caractérisé en ce que** le corps (20) comprend une matière plastique, du verre ou de la vitrocéramique, de préférence du verre de borosilicate.

4. Procédé d'examen optique selon l'une quelconque des revendications précédentes, **caractérisé en ce que** le corps (20) comprend une section tubulaire ou une section en barre, ou un contenant ou un moyen de conditionnement, de préférence un moyen de conditionnement pharmaceutique, comprenant une seringue, une cartouche, un flacon (30) ou une ampoule.

5. Procédé d'examen optique selon l'une quelconque des revendications précédentes, **caractérisé en ce que** le corps (20) comprend un contenant en verre, de préférence en verre de borosilicate.

6. Procédé d'examen optique selon l'une quelconque des revendications précédentes, **caractérisé en ce que** pour l'analyse de l'image différentielle (42', 42"), des objets sont éliminés de l'image différentielle (42', 42"), lesquels sont présents sur une position identique dans des images consécutives.

7. Procédé d'examen optique selon l'une quelconque des revendications précédentes, **caractérisé en ce que** le flou cinétique de l'image est déduit lors de l'analyse de défauts.

8. Procédé d'examen optique selon l'une quelconque des revendications précédentes, **caractérisé en ce que** l'angle de rotation du corps (20) entre deux positions de rotation consécutives n'est pas supérieur à 20°, n'est pas supérieur à 10°, de préférence n'est pas supérieur à 5°, de manière préférée n'est pas supérieur à 2° et de manière particulièrement préférée n'est pas supérieur à 1°.

9. Procédé d'examen optique selon l'une quelconque des revendications précédentes, **caractérisé en ce que** la rotation du corps (20) est effectuée en continu pendant les prises.

10. Procédé d'examen optique selon l'une quelconque des revendications précédentes, **caractérisé en ce que** le système de prise d'images (14) comprend une caméra à matrices ou une caméra à lignes multiples.

11. Procédé d'examen optique selon l'une quelconque des revendications précédentes, **caractérisé en ce qu'**au moins un système d'éclairage (11) est prévu pour éclairer le corps (20) pendant l'examen.

12. Procédé d'examen optique selon la revendication précédente, **caractérisé en ce que** le système d'éclairage (11) comprend une source de rayonnement, laquelle émet un rayonnement électromagnétique dans la plage de longueurs d'onde visible et/ou dans la plage de l'infrarouge proche et/ou dans la plage de l'ultraviolet proche.

13. Procédé d'examen optique selon l'une quelconque des deux revendications précédentes, **caractérisé en ce que** la source de rayonnement émet un rayonnement monochromatique.

14. Procédé d'examen optique selon l'une quelconque des revendications précédentes 11 ou 12, **caractérisé en ce que** la source de rayonnement rayonne de la lumière blanche.

15. Procédé d'examen optique selon l'une quelconque des revendications précédentes 11 à 14, **caractérisé en ce que** l'éclairage est réalisé de manière diffuse.

16. Dispositif d'inspection (1) pour l'examen optique de corps (20), de préférence de corps (20) transparents, comprenant
- au moins un système de prise d'images (14) optique,
- une unité de calcul,
- au moins un système d'éclairage (11) pour éclairer le corps, ainsi
- qu'un dispositif de rotation (12) pour faire tourner le corps (20), réalisé pour la mise en œuvre des étapes suivantes :
a) de création d'une première prise individuelle (40', 40", 40"') du corps (20) et de transmission de celle-ci en tant qu'image numérique à l'unité de calcul, dans lequel l'image fait office d'image de référence,
b) de rotation du corps (20) autour d'un angle de rotation prédéfini jusqu'à atteindre une position de rotation suivante prédéfinie,
c) de création d'une autre prise individuelle (40', 40", 40"') consécutive du corps (20) dans cette position de rotation, et de transmission de la deuxième prise individuelle en tant qu'autre image numérique à l'unité de calcul,
d) de comparaison par calcul de l'image de référence à l'autre image par soustraction des images pour produire une image différentielle (42', 42"),
e) de déroulement par calcul de l'image différentielle (42', 42") par dépliage, de préférence par dépliage cylindrique,
f) d'analyse de l'image différentielle (42', 42") dépliée par l'unité de calcul, dans lequel pour l'analyse de l'image différentielle (42', 42"), le décalage latéral d'un objet est évalué dans des images consécutives en relation avec la vitesse de rotation du corps,
g) de répétition des étapes ci-avant b) à f), dans lequel respectivement l'autre image est prise en tant qu'image de référence jusqu'à au moins une rotation complète du corps (20) .

17. Dispositif d'inspection (1) pour l'examen optique selon la revendication précédente, dans lequel la profondeur de champ du système de prise d'images (14) concentré sur le corps (20) est d'au moins 1 cm, de préférence d'au moins 3 cm et de manière particulièrement préférée d'au moins 10 cm.

18. Dispositif d'inspection (1) pour l'examen optique selon la revendication 16, dans lequel la profondeur de champ du système de prise d'images concentré sur le corps (20) est inférieure à 1 cm, de manière préférée est inférieure à 0,5 cm, de manière particulièrement préférée est inférieure à 2 mm.

19. Dispositif d'inspection (1) pour l'examen optique selon la revendication 16, dans lequel la profondeur de champ du système de prise d'images (14) concentré sur le corps (20) est choisie en fonction de l'épaisseur du corps (20), et dans lequel le rapport entre la profondeur de champ et l'épaisseur du corps (20) est inférieur à 5, de manière préférée est inférieur à 2, de manière particulièrement préférée est inférieur à 1,5.
